# EUROPÄISCHE PATENTANMELDUNG

(11) **EP 3 203 573 A1**
(43) Veröffentlichungstag der Anmeldung: **09.08.2017**
(21) Anmeldenummer: 16154064.6
(22) Anmeldetag: 03.02.2016
(51) Int. Cl.: H01M 10/38, H01M 10/39, H01M 10/643, H01M 10/654, H01M 10/656, H01M 10/42

(54) **ELEKTROCHEMISCHE ZELLE UND VORRICHTUNG ZUR SPEICHERUNG ELEKTRISCHER ENERGIE UMFASSEND MINDESTENS ZWEI ELEKTROCHEMISCHE ZELLEN**

(71) Anmelder: BASF SE, 67056 Ludwigshafen am Rhein (DE)
(72) Erfinder: Heidebrecht, Peter, 67459 Boehl-Iggelheim (DE); Bayer, Dominik, 69121 Heidelberg (DE); Zerpa Unda, Jesus Enrique, 64646 Heppenheim (DE); Duerr, Anna Katharina, 67063 Ludwigshafen am Rhein (DE)
(74) Vertreter: Kudla, Karsten

(57) **Zusammenfassung**

Die Erfindung betrifft eine elektrochemische Zelle, umfassend einen Raum für Anodenmaterial und einen Raum für Kathodenmaterial, die durch einen Festelektrolyten (3) voneinander getrennt sind, wobei der Festelektrolyt (3) mit einer porösen Elektrode (13) verbunden ist und einen Raum (5) umschließt, in dem ein Verdrängerkörper (15) aufgenommen ist, wobei der vom Festelektrolyten (3) umschlossene Raum (5) der Raum für Anodenmaterial oder der Raum für Kathodenmaterial ist, wobei der Verdrängerkörper (15) von einem Temperiermedium durchströmbar ist.

Weiterhin betrifft die Erfindung eine Vorrichtung zur Speicherung elektrischer Energie, umfassend mindestens zwei elektrochemische Zellen (1).

## Beschreibung

Die Erfindung geht aus von einer elektrochemischen Zelle, umfassend einen Raum für Anodenmaterial und einen Raum für Kathodenmaterial, die durch einen Festelektrolyten voneinander getrennt sind, wobei der Festelektrolyt mit einer porösen Elektrode verbunden ist und einen Raum umschließt, in dem ein Verdrängerkörper aufgenommen ist, wobei der vom Festelektrolyten umschlossene Raum der Raum für Anodenmaterial oder der Raum für Kathodenmaterial ist.

Die Erfindung geht weiterhin aus von einer Vorrichtung zur Speicherung elektrischer Energie, umfassend mindestens zwei der elektrochemischen Zellen.

Elektrochemische Zellen, die zur Speicherung elektrischer Energie eingesetzt werden, werden im Allgemeinen als Batterie oder Akkumulator bezeichnet. Andere elektrochemische Vorrichtungen sind zum Beispiel Elektrolysezellen. Diese können beispielsweise zur Herstellung von Alkalimetallen aus geeigneten Alkalimetalle enthaltenden Salzen eingesetzt werden.

Neben Batterien, die bei Umgebungstemperatur arbeiten, gibt es auch solche, die eine Betriebstemperatur oberhalb der Umgebungstemperatur erfordern. Hierbei handelt es sich im Allgemeinen um elektrochemische Zellen, die mit schmelzflüssigen Elektrolyten arbeiten, wobei die Schmelztemperatur mindestens eines Elektrolyten oberhalb der Umgebungstemperatur liegt. Entsprechende Batterien sind zum Beispiel solche auf Basis von Alkalimetall und Schwefel, wobei sowohl Schwefel als auch Alkalimetall in geschmolzenem Zustand eingesetzt werden.

Entsprechende Batterien, die auf Basis eines geschmolzenen Alkalimetalls als Anode und einem kathodischen Reaktionsteilnehmer, im Allgemeinen Schwefel, arbeiten, sind zum Beispiel in DE-A 26 35 900 oder DE-A 26 10 222 bekannt. Hierbei werden das geschmolzene Alkalimetall und der kathodische Reaktionsteilnehmer durch einen für Kationen durchlässigen Festelektrolyten getrennt. An der Kathode erfolgt eine Reaktion des Alkalimetalls mit dem kathodischen Reaktionsteilnehmer. Dies ist zum Beispiel bei Einsatz von Natrium als Alkalimetall und Schwefel als kathodischem Reaktionsteilnehmer die Reaktion von Natrium und Schwefel zu Natriumpolysulfid. Zum Laden der Batterie wird das Natriumpolysulfid an der Elektrode durch Aufbringen elektrischer Energie wieder in Natrium und Schwefel getrennt.

Zur Vergrößerung der Speicherfähigkeit von Batterien auf Basis von einem geschmolzenen Alkalimetall und einem kathodischen Reaktionsteilnehmer werden Batterien eingesetzt, bei denen durch zusätzliche Vorratsbehälter die Menge an den eingesetzten Reaktanden vergrößert wird. Zum Entladen wird das flüssige Natrium dem Festelektrolyten zugeführt. Das flüssige Natrium dient gleichzeitig als Anode und bildet Kationen, die durch den kationenleitenden Festelektrolyten zur Kathode transportiert werden. An der Kathode wird der an die Kathode anströmende Schwefel zu Polysulfid reduziert, also mit den Natriumionen zu Natriumpolysulfid umgesetzt. Das entsprechende Natriumpolysulfid kann in einem weiteren Behälter gesammelt werden. Alternativ ist es auch möglich, das Natriumpolysulfid mit dem Schwefel gemeinsam im Behälter um den Kathodenraum zu sammeln. Aufgrund des Dichteunterschiedes steigt der Schwefel auf und setzt sich das Natriumpolysulfid ab. Diese Dichtedifferenz kann auch dazu genutzt werden, eine Strömung entlang der Kathode zu bewirken. Ein entsprechendes Batteriedesign ist zum Beispiel in WO 2011/161072 beschrieben.

Da alle elektrochemischen Reaktanden schmelzflüssig vorliegen und der optimale Leitfähigkeitsbereich der ionenleitenden keramischen Membran erst bei höheren Temperaturen erreicht wird, liegt die Betriebstemperatur einer solchen Batterie üblicherweise in einem Bereich von 300°C bis 370°C. Die maximale Temperatur ergibt sich dabei im Allgemeinen aus der Degradation der als Festelektrolyt eingesetzten Keramik.

Da der in der elektrochemischen Zelle eingesetzte Festelektrolyt üblicherweise eine ionenleitende Keramik ist, kann ein Bruch der Keramik nicht ausgeschlossen werden. Ein solcher Bruch führt zu einem unerwünschten Kontakt von Anodenmaterial, im Allgemeinen Natrium, und Kathodenmaterial, im Allgemeinen Schwefel, und kann zu einer unkontrollierten Reaktion führen. Um die Folgen einer solchen Reaktion einzudämmen muss der Anteil an für die Reaktion zur Verfügung stehendem Natrium klein gehalten werden. Dies wird zum Beispiel durch den Einsatz eines Verdrängers erreicht, der den Raum für Anodenmaterial ausfüllt, so dass nur ein kleiner Spalt übrig bleibt, in dem sich das Anodenmaterial befindet. Ein solcher Verdränger ist zum Beispiel aus Beispiel aus der WO2013/186213 oder aus der JP-A 10270073 bekannt.

Da elektrochemische Zellen auf Basis eines Alkalimetalls als Anodenmaterial und Schwefel als Kathodenmaterial bei einer Temperatur betrieben werden, bei der sowohl das Alkalimetall als auch Schwefel flüssig sind, werden die Zellen üblicherweise in einem isolierenden Behälter betrieben. In dem isolierenden Behälter können, wie in JP-A 2003-234132 beschrieben, Heizelemente vorgesehen sein, um zu verhindern, dass die Temperatur der Zellen unter eine für den Betrieb erforderliche Mindesttemperatur sinkt.

Aus US 8,597,813 ist es bekannt, den isolierenden Behälter einzuhausen und die Einhausung mit Lamellen auszustatten. Durch Öffnen oder Schließen der Lamellen kann die Wärmeabfuhr an der Außenseite des isolierenden Behälters geregelt werden. Gemäß JP-A 05121092 ist der isolierende Behälter doppelwandig ausgeführt und zwischen den Wandungen des Doppelmantels ist ein Vakuum ausgebildet. Durch Einstellung des Unterdrucks kann die Wärmeabfuhr eingestellt werden.

Um zu vermeiden, dass sich im Betrieb aufgrund der frei werdenden Wärme die Temperatur erhöht, ist es aus KR-A 2011-054717 bekannt, ein Phasenwechselmaterial zwischen den elektrochemischen Zellen einzubringen, das bei Betriebstemperatur einen Phasenwechsel durchläuft. Hierdurch kann im isolierten Bereich eine Temperaturerhöhung verzögert werden. Alternativ zum Einsatz des Phasenwechselmaterials ist es aus JP-A 04051472 bekannt, den isolierenden Behälter, in dem die elektrochemischen Zellen aufgenommen sind, zur Kühlung mit Außenluft zu durchblasen und aus JP-A 2001-243993 Wärmerohre zwischen den elektrochemischen Zellen zu positionieren, deren Kopf außerhalb des isolierenden Behälters liegt.

Nachteil aller dieser Systeme ist jedoch, dass keine Wärme aus dem Inneren der elektrochemischen Zellen abgeführt werden kann oder dem Inneren der elektrochemischen Zellen zugeführt werden kann. Alle aus dem Stand der Technik bekannten Verfahren erlauben nur die Beheizung der Zwischenräume zwischen den elektrochemischen Zellen oder die Wärmeabfuhr aus den Zwischenräumen. Durch die Bauart ist auch die Größe der elektrochemischen Zellen begrenzt, da die in großen Zellen freiwerdende Wärme nicht ausreichend abgeführt werden kann.

Aufgabe der vorliegenden Erfindung ist es daher, eine elektrochemische Zelle bereitzustellen, bei der auch eine Temperierung im Inneren der Zelle möglich ist und so eine kontrollierte Temperaturführung ermöglicht wird und auch größere Zellen mit ausreichender Sicherheit betrieben werden können.

Diese Aufgabe wird gelöst durch eine elektrochemische Zelle, umfassend einen Raum für Anodenmaterial und einen Raum für Kathodenmaterial, die durch einen Festelektrolyten voneinander getrennt sind, wobei der Festelektrolyt mit einer porösen Elektrode verbunden ist und einen Raum umschließt, in dem ein Verdrängerkörper aufgenommen ist, wobei der vom Festelektrolyten umschlossene Raum der Raum für Anodenmaterial oder der Raum für Kathodenmaterial ist, wobei der Verdrängerkörper von einem Temperiermedium durchströmbar ist.

Das Durchströmen des Verdrängers mit einem Temperiermedium erlaubt es abhängig vom Betriebszustand direkt in das Innere der elektrochemischen Zelle Wärme zuzuführen oder Wärme aus dem Inneren der elektrochemischen Zelle abzuführen. So ist es zum Beispiel möglich, beim Anfahren oder Herunterfahren der elektrochemischen Zellen die Temperatur in den Zellen genau einzustellen. Hierdurch können zum Beispiel beim Herunterfahren der elektrochemischen Zellen das Erstarren der Reaktanden und beim Anfahren das Aufschmelzen der Reaktanden insbesondere auf Seite des Kathodenmaterials unter kontrollierten Bedingungen durchgeführt werden.

Im regulären Betrieb der elektrochemischen Zelle ist es möglich, die Temperatur der einzelnen Zellen über den mit dem Temperiermedium durchströmten Verdrängerkörper präzise zu regeln. Je nach Anzahl von Vorlagebehältern für Temperiermedium und eingesetzten Thermostaten sowie der Strömungsgeschwindigkeit des Temperiermediums kann die Temperatur in allen angeschlossenen elektrochemischen Zellen in einem Bereich von bis zu 50 K über einem vorgegebenen Sollwert, bevorzugt in einem Bereich von bis zu 10 K über einem gegebenen Sollwert gehalten werden. Der Sollwert ergibt sich dabei aus der Technologie der eingesetzten elektrochemischen Zelle sowie der Betriebsart.

Die Temperatur in den einzelnen elektrochemischen Zellen kann mit der erfindungsgemäßen elektrochemischen Zelle sogar dann weitgehend konstant gehalten werden, wenn in einer Batterie, in der mehrere elektrochemische Zellen miteinander elektrisch verschaltet sind, einzelne Zellen unterschiedliches Verhalten und damit unterschiedliche Wärmeerzeugungsraten aufweisen, zum Beispiel durch unterschiedlich schnelle Alterung oder unterschiedliche elektrische Belastung.

Ein weiterer Vorteil des Einsatzes der erfindungsgemäßen elektrochemischen Zellen in einer Batterie ist, dass auch im Falle eines thermischen Durchgehens einzelner Zellen die entstehende Wärme besser als bei herkömmlichen Zellen abgeführt werden kann. Es ist zwar nicht möglich, Temperaturanstiege innerhalb von Sekunden abzufangen, jedoch kann eine Überhitzung über Stunden und Tage aufgrund fortgesetzter Wärmeerzeugung abgefangen werden.

Die höhere elektrische Leistung der Zellen und eine längere Ladedauer sowie längere Entladedauer erfordern größere Mengen an Kathodenmaterial und Anodenmaterial, und somit größere Abmessungen des den Festelektrolyten umschließenden Raumes. Die bei der Reaktion von Anodenmaterial mit Kathodenmaterial entstehende Wärme muss bei derzeitigen Gestaltungen durch das im den Festelektrolyten umschließenden Raum befindliche Material nach außen geleitet werden. Da dieses Material - bei der Natrium-Schwefel-Batterie schmelzflüssiger Schwefel - oftmals schlechte Wärmeleitfähigkeit besitzt, sind hierfür sehr große Temperaturunterschiede zwischen dem Festelektrolyten und dem Behälter des den Festelektrolyten umschließenden Raumes erforderlich. Dies erschwert das Einstellen und Einhalten der Elektrolyttemperatur innerhalb des vorgegebenen Temperaturbereiches dahingehend, dass die Temperatur nur sehr ungenau und äußerst langsam geregelt werden kann. Die erfindungsgemäße Zelle, bei der die Wärme direkt aus dem Inneren der elektrochemischen Zellen abgeführt wird, erlaubt daher auch die Realisierung größerer Räume für Anoden- und Kathodenmaterial, wodurch Zellen mit höherer Leistung, beispielsweise 100 bis 1000 Watt, sowie längerer Ladedauer und Entladedauer, beispielsweise 5 bis 50 Stunden, ermöglicht werden

In einer Ausführungsform der Erfindung ist der Verdrängerkörper als Hohlkörper ausgebildet, wobei das Temperiermedium durch den Hohlkörper strömt. Hierzu wird der Verdrängerkörper vorzugsweise mit einem Ablauf und einem Zulauf für das Temperiermedium verbunden, wobei der Zulauf und der Ablauf vorzugsweise in unterschiedlicher Höhe im Hohlraum des Hohlkörpers enden, um ein Durchströmen des Hohlkörpers zu realisieren. Hierzu ist es zum Beispiel möglich, dass der Zulauf im oberen Bereich des Hohlraums endet und der Ablauf als Tauchrohr im unteren Bereich des Hohlraums. Alternativ können selbstverständlich auch der Zulauf als Tauchrohr im unteren Bereich und der Ablauf im oberen Bereich des Hohlraumes enden. Für die Durchströmung des Hohlraums mit dem Temperiermedium wird vorzugsweise eine Pumpe eingesetzt, die eine Strömung des Temperiermediums realisiert. Das Temperiermedium wird dabei vorzugsweise in einem Vorlagebehälter vorgelegt und aus dem Vorlagebehälter durch den Zulauf in den Hohlraum geleitet und über den Ablauf wieder zurück in den Vorlagebehälter.

Um eine konstante Temperatur innerhalb der elektrochemischen Zelle zu realisieren und die Temperatur regeln zu können, ist der Vorlagebehälter vorzugsweise ein Thermostat, in dem das Temperiermedium auf die gewünschte Temperatur eingestellt wird.

Alternativ zur Gestaltung des Verdrängerkörpers als Hohlkörper ist es auch möglich, den Verdrängerkörper als Doppelmantel auszuführen, durch den das Temperiermedium geleitet wird. In einer weiteren alternativen Ausführungsform sind im Verdrängerkörper Kanäle ausgebildet, die vom Temperiermedium durchströmt werden. Die im Verdrängerkörper ausgebildeten Kanäle können zum Beispiel spiralförmig oder mäandernd im Verdrängerkörper verlaufen. Wichtig bei der Gestaltung mit Kanälen im Verdrängerkörper ist, dass die Kanäle in gutem thermischen Kontakt zur gesamten Oberfläche des Verdrängerkörpers verlaufen.

Besonders bevorzugt ist es, den Verdrängerkörper als Hohlkörper zu gestalten, durch den das Temperiermedium durchströmen kann.

Die elektrochemische Zelle kann sowohl derart aufgebaut sein, dass der von dem Festelektrolyten umschlossene Raum der Raum für Anodenmaterial ist, als auch derart, dass der von dem Festelektrolyten umschlossene Raum der Raum für Kathodenmaterial ist. Wenn der vom Festelektrolyten umschlossene Raum der Raum für Anodenmaterial ist, ist dieser vorzugsweise mit einem Speicher für Anodenmaterial verbunden. Entsprechend ist der Raum, der vom Festelektrolyten umschlossen ist, mit einem Speicher für Kathodenmaterial verbunden, wenn dieser der Raum für Kathodenmaterial ist. Bevorzugt ist dabei ein Aufbau derart, dass der vom Festelektrolyten umschlossene Raum der Raum für Anodenmaterial ist und mit einem Speicher für Anodenmaterial verbunden ist. Dies hat den weiteren Vorteil, dass eine noch weiter verbesserte Temperierung möglich ist, da das Anodenmaterial üblicherweise eine höhere Wärmeleitfähigkeit aufweist als das Kathodenmaterial.

Unabhängig von der Anordnung von Anodenraum und Kathodenraum ergibt sich durch den Einsatz des Verdrängers der weitere Vorteil, dass die Menge an einem der in der elektrochemischen Zelle vorhandenen Reaktionspartner klein gehalten wird, so dass bei einem Bruch des Festelektrolyten nur eine geringe Menge an Material zur Verfügung steht, die abreagieren kann. Da es bei einem Bruch des Festelektrolyten zu einem direkten Kontakt von Anodenmaterial und Kathodenmaterial kommt, führt dies zu einer unkontrollierten Reaktion.

Der erfindungsgemäße Aufbau einer elektrochemischen Zelle kann bei allen elektrochemischen Zellen eingesetzt werden, aus denen Wärme abgeführt werden muss oder denen Wärme zugeführt werden muss. Derartige Zellen sind insbesondere solche, die bei erhöhter Temperatur, üblicherweise bei Temperaturen von mehr als 100°C betrieben werden, beispielsweise NaNiCI-Zellen oder Alkalimetall/Chalkogenid-Zellen, beispielsweise NaS-Zellen.

Weiterhin eignet sich der erfindungsgemäße Aufbau für Batterien, die in einem Umfeld betrieben werden, bei dem die Batterie beheizt werden muss oder für Batterien, die eine präzise Temperaturführung benötigen. Batterien, die in einem Umfeld betrieben werden, bei dem die Batterie beheizt werden muss, sind zum Beispiel Batterien, die ein gewisses Temperaturfenster nicht unterschreiten dürfen, zum Beispiel solche, die bei niedrigen Außentemperaturen eingesetzt werden, beispielsweise Lithium-Ionen-Batterien oder Blei/Säure-Batterien.

In einer bevorzugten Ausführungsform ist das Anodenmaterial ein Alkalimetall, insbesondere Natrium, und das Kathodenmaterial Schwefel oder ein Alkalimetallpolysulfid, insbesondere Natriumpolysulfid. Da eine elektrochemische Zelle, bei der als Anodenmaterial ein Alkalimetall und als Kathodenmaterial Schwefel eingesetzt wird, bei erhöhter Temperatur zu betreiben ist, da sowohl das Alkalimetall als auch der Schwefel für eine Funktion der elektrochemischen Zelle flüssig vorliegen müssen, hat der erfindungsgemäße Aufbau den weiteren Vorteil, dass die elektrochemische Zelle erwärmt und auf einer Temperatur gehalten werden kann, bei der sowohl Alkalimetall als auch Schwefel als Schmelze vorliegen.

Als Festelektrolyt wird in einer bevorzugten Ausführungsform eine Keramik eingesetzt. Besonders geeignet als Material für den Festelektrolyten ist β-Aluminiumoxid oder β"-Aluminiumoxid. Dieses wird vorzugsweise stabilisiert, beispielsweise mit Magnesiumoxid, Lithiumoxid oder Zirkoniumoxid.

Alternativ zu β-Aluminiumoxid oder β"-Aluminiumoxid können auch andere keramische Materialien als Festelektrolyt eingesetzt werden. Zum Beispiel kann die als NASCION^{®} bezeichnete Keramik, deren Zusammensetzung in EP-A 0 553 400 angegeben ist, eingesetzt werden. Alternativ zu Keramiken können auch Natriumionen-leitende Gläser oder Zeolithe und Feldspate eingesetzt werden. Insbesondere bevorzugt sind jedoch Natrium-β"-Aluminiumoxid, Natrium-β-Aluminiumoxid, Natrium-β/β"-Aluminiumoxid.

Der Festelektrolyt ist bevorzugt als einseitig unten geschlossenes, oben offenes, dünnwandiges Rohr gestaltet. In diesem Fall ist es weiterhin bevorzugt, wenn das den Festelektrolyten bildende Rohr einen Durchmesser von 20 bis 70 mm und eine Länge im Bereich von 0,5 m bis 2 m aufweist. Die Wandstärke liegt vorzugsweise im Bereich von 0,5 mm bis 3 mm, insbesondere im Bereich von 1,5 mm bis 2 mm.

Der Festelektrolyt ist im Allgemeinen von einer porösen Elektrode umschlossen, die aus einem Material gefertigt wird, das gegenüber den bei der elektrochemischen Reaktion eingesetzten Substanzen inert ist. Als Material für die Elektrode eignet sich zum Beispiel Kohlenstoff, insbesondere in Form von Graphit.

Damit die an der elektrochemischen Reaktion beteiligten Stoffe durch die Elektrode strömen können, ist diese erfindungsgemäß porös. Dies wird zum Beispiel dadurch erzielt, dass das Material der porösen Elektroden in Form eines Filzes oder Vlieses vorliegt. Ganz besonders bevorzugt ist die Elektrode eine Graphitfilzelektrode.

Um einen direkten Kontakt der Elektrode mit dem Festelektrolyten zu vermeiden, ist zwischen der porösen Elektrode und dem Festelektrolyten vorzugsweise eine hinsichtlich Elektronenleitung isolierende poröse mit flüssigem Elektrolyten gefüllte Schicht angeordnet. Als "hinsichtlich Elektronenleitung isolierend" wird im Rahmen der vorliegenden Erfindung ein Material verstanden, das einen spezifischen Widerstand von mindestens 10⁸Ohm*cm und insbesondere von mindestens 10⁹Ohm*cm aufweist. Das Material für die isolierende Schicht ist dabei so zu wählen, dass Kationen, die durch den Festelektrolyten transportiert werden, auch durch die isolierende Schicht an die poröse Elektrode gelangen können, und die Elektronenleitfähigkeit vernachlässigbar klein ist. Geeignet als elektrisch isolierendes Material, das zwischen dem Festelektrolyten und der Elektrode angeordnet ist, sind zum Beispiel eloxiertes oder Sulfidpassiviertes Aluminiumgewebe, keramische Fasern, Glasfasern oder Kohlegewebe. Durch das elektrisch nicht leitende Material wird vermieden, dass sich nicht leitendes Kathodenmaterial, beispielsweise Schwefel, auf dem Festelektrolyten ablagert und dadurch beim Laden den Stromfluss limitiert.

Um eine für technische Anwendungen ausreichende elektrische Energie bereitzustellen, werden üblicherweise mindestens zwei der elektrochemischen Zellen zu einer Vorrichtung zur Speicherung elektrischer Energie zusammengeschaltet. Die Verschaltung der elektrochemischen Zellen kann dabei in Reihe oder parallel erfolgen. Weiterhin ist es auch möglich, jeweils mehrere in Reihe geschaltete elektrochemische Zellen parallel miteinander zu verbinden oder mehrere parallel geschaltete elektrochemische Zellen in Reihe miteinander zu verbinden. Neben der elektrochemischen Zelle betrifft die vorliegende Erfindung auch eine solche Vorrichtung zur Speicherung elektrischer Energie, die mindestens zwei der vorstehend beschriebenen elektrochemischen Zellen umfasst.

Neben der elektrischen Verschaltung, die wie vorstehend beschrieben in Reihe und/oder parallel erfolgen kann, ist es auch möglich, eine entsprechende Anbindung für das Temperiermedium zur Temperierung der Zellen vorzusehen. Hierzu ist es zum Beispiel möglich, dass mindestens zwei elektrochemische Zellen mit einem gemeinsamen Vorlagebehälter für das Temperiermedium verbunden sind, wobei jeder Verdrängerkörper einen Zulauf für Temperiermedium und einen Ablauf für Temperiermedium aufweist und die Zuläufe und die Abläufe zu den Verdrängerkörpern in Reihenschaltung oder in Parallelschaltung mit dem Vorlagebehälter verbunden sind. Neben einer reinen Reihenschaltung oder einer reinen Parallelschaltung ist es auch möglich, dass mehrere elektrochemische Zellen zu einem Zellverband verbunden sind, wobei die Zuläufe der elektrochemischen Zellen des Zellverbandes jeweils mit einem Verteiler verbunden sind und die Abläufe der elektrochemischen Zellen mit einem Sammler verbunden sind und wobei die Verteiler der Zellverbände mit einem Hauptverteiler verbunden sind und die Sammler mit einem Hauptsammler. Weiterhin ist es auch möglich, dass mindestens zwei Zellverbände mit in Reihenschaltung verbundenen Zuläufen und Abläufen parallel mit einem Hauptverteiler und einem Hauptsammler verbunden sind.

Zur Temperierung der mehrere elektrochemische Zellen umfassenden Vorrichtung kann ein einziger Vorlagebehälter für das Temperiermedium vorgesehen sein. Abhängig von der Anzahl der elektrochemischen Zellen der Vorrichtung ist es jedoch auch möglich, mehrere Vorlagebehälter für das Temperiermedium vorzusehen. Dies ist insbesondere bei großen Anzahlen an elektrochemischen Zellen sinnvoll und notwendig.

Neben einer Ausführungsform, bei der jeweils mindestens zwei elektrochemische Zellen mit einem gemeinsamen Vorlagebehälter für das Temperiermedium verbunden sind, ist es alternativ auch möglich, jede einzelne elektrochemische Zelle der Vorrichtung mit einem individuellen Vorlagebehälter für das Temperiermedium zu verbinden. Dies hat den Vorteil, dass jede einzelne elektrochemische Zelle separat hinsichtlich ihrer Temperatur geregelt werden kann. Bevorzugt ist es jedoch, dass jeweils mindestens zwei elektrochemische Zellen mit einem Vorlagebehälter für das Temperiermedium verbunden sind.

Üblicherweise umfasst eine Vorrichtung zur Speicherung elektrischer Energie eine große Anzahl an Zellen, die bis zu mehreren hunderttausend betragen kann. Dabei sind bevorzugt 100 bis 2000 Zellen mit einem Vorlagebehälter für das Temperiermedium verbunden.

Um die Temperatur der elektrochemischen Zellen steuern oder regeln zu können, ist es bevorzugt, wenn die Temperatur des Temperiermediums eingestellt werden kann. Hierzu ist es zum Beispiel möglich, in einer Verbindungsleitung vom Vorlagebehälter zu den elektrochemischen Zellen einen Wärmeübertrager zu positionieren, in dem das Temperiermedium erwärmt oder abgekühlt werden kann. Alternativ und bevorzugt ist es jedoch, den Wärmeübertrager innerhalb des Vorlagebehälters zu positionieren. Als Wärmeübertrager kann dabei jeder beliebige, dem Fachmann bekannte Wärmeübertrager eingesetzt werden. Bevorzugt ist dabei der Einsatz eines Wärmeübertragers, der so geregelt oder gesteuert werden kann, dass das Temperiermedium auf eine vorgegebene Temperatur temperiert werden kann. Zur Erwärmung des Temperiermediums besonders geeignet sind hierbei insbesondere elektrisch betriebene Wärmeübertrager, beispielsweise elektrische Heizelemente. Der Vorlagebehälter für das Temperiermedium arbeitet dabei vorzugsweise nach dem Beispiel eines Thermostaten.

Als Temperiermedium kann jede Flüssigkeit oder jedes Gas eingesetzt werden, das bei den in den elektrochemischen Zellen herrschenden Temperaturen stabil ist. Als Temperiermedium eignen sich zum Beispiel Thermalöle, Wasserdampf, Wasser, Kältemittel oder auch Salzschmelzen. Hierbei können alle dem Fachmann bekannten Thermalöle, Kältemittel oder Salzschmelzen, die bei der Betriebstemperatur der elektrochemischen Zelle verwendbar sind, eingesetzt werden. Bei Einsatz in einer Natrium-Schwefel-Zelle sind insbesondere Thermalöle oder Salzschmelzen bevorzugt. Weiterhin können Temperiermedien eingesetzt werden, die bei der Temperierung der elektrochemischen Zellen einen Phasenwechsel durchlaufen. Dies hat den Vorteil, dass eine große Wärmemenge bei gleichbleibender Temperatur übertragen werden kann. Dabei ist es insbesondere bevorzugt, wenn das Temperiermedium zum Kühlen der elektrochemischen Zelle einen Phasenwechsel von flüssig nach gasförmig oder alternativ zum Heizen der elektrochemischen Zelle von gasförmig nach flüssig durchläuft.

Neben der Gestaltung der Vorrichtung zur Speicherung elektrischer Energie derart, dass mehrere elektrochemische Zellen mit einem Vorlagebehälter für Temperiermedium verbunden sind, ist es auch möglich, die vom Festelektrolyten umschlossenen Räume mehrerer elektrochemischer Zellen mit einem gemeinsamen Speicher zu verbinden. Wenn die vom Festelektrolyten umschlossenen Räume mehrerer elektrochemischer Zellen jeweils Anodenräume sind, sind somit alle Anodenräume mit einem gemeinsamen Speicher für Anodenmaterial verbunden und wenn die vom Festelektrolyten umschlossenen Räume mehrerer elektrochemischer Zellen jeweils Kathodenräume sind, sind alle Kathodenräume mit einem gemeinsamen Speicher für Kathodenmaterial verbunden. Auch hier ist es bevorzugt, wenn die vom Festelektrolyten umschlossenen Räume Anodenräume sind und die Anodenräume mit einem gemeinsamen Speicher für Anodenmaterial verbunden sind.

Alternativ ist es jedoch auch hier möglich, für jede einzelne Zelle jeweils einen eigenen Speicher für Anodenmaterial oder Kathodenmaterial vorzusehen.

Ausführungsbeispiele der Erfindung sind in den Figuren dargestellt und werden in der nachfolgenden Beschreibung näher erläutert.

Es zeigen:
- Figur 1: eine erfindungsgemäße elektrochemische Zelle,
- Figur 2: eine schematische Darstellung einer Vorrichtung zur Speicherung elektrischer Energie mit mehreren elektrochemischen Zellen in einer ersten Ausführungsform,
- Figur 3: eine schematische Darstellung einer Vorrichtung zur Speicherung elektrischer Energie mit mehreren elektrochemischen Zellen in einer zweiten Ausführungsform,
- Figur 4: eine schematische Darstellung einer Vorrichtung zur Speicherung elektrischer Energie mit mehreren elektrochemischen Zellen in einer dritten Ausführungsform.

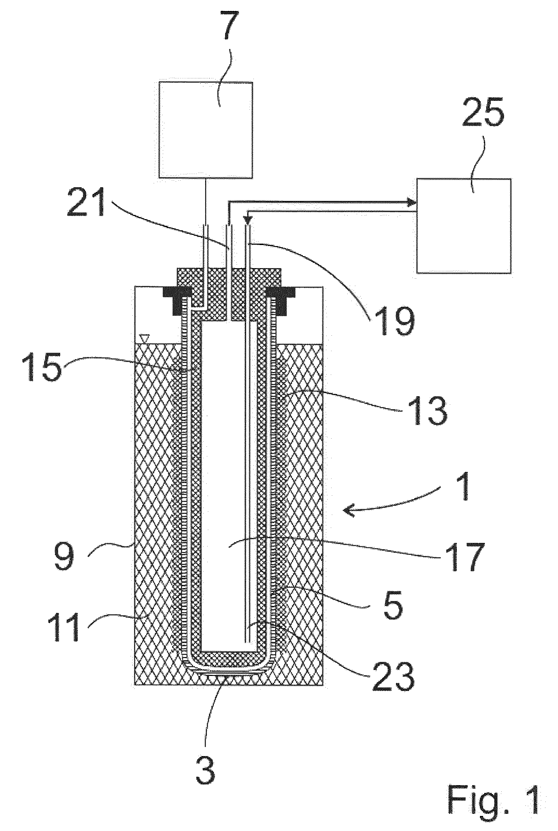

In Figur 1 ist eine elektrochemische Zelle dargestellt.

Eine elektrochemische Zelle 1 umfasst einen Festelektrolyten 3, der einen Raum 5 umschließt. Der Raum 5 kann im Betrieb der elektrochemischen Zelle 1 entweder mit Anodenmaterial oder mit Kathodenmaterial befüllt sein. Der vom Festelektrolyten 3 umschlossene Raum 5 ist zur Vergrößerung der Kapazität der elektrochemischen Zelle 1 mit einem Speicher 7 verbunden. Wenn der vom Festelektrolyten 3 umschlossene Raum 5 ein Raum für Kathodenmaterial ist, ist der Speicher 7 ein Speicher für Kathodenmaterial und entsprechend, wenn der vom Festelektrolyten 3 umschlossene Raum 5 ein Raum für Anodenmaterial ist, ist der Speicher 7 ein Speicher für Anodenmaterial.

Der Festelektrolyt 3 ist in einem Gehäuse 9 aufgenommen, wobei ein zweiter Raum 11 den Festelektrolyten 3 umschließt und vom Gehäuse 9 begrenzt wird. Der den Festelektrolyten 3 umschließende Raum 11 ist ein Raum für Kathodenmaterial, wenn der vom Festelektrolyten 3 umschlossene Raum 5 ein Raum für Anodenmaterial ist, und ein Raum für Anodenmaterial, wenn der vom Festelektrolyten 3 umschlossene Raum 5 ein Raum für Kathodenmaterial ist. Die Größe des den Festelektrolyten 3 umschließenden Raumes 11 wird dabei so gewählt, dass die gewünschte Kapazität der elektrochemischen Zelle 1 erreicht wird. Vorzugsweise ist der Raum 11 so groß, dass das gesamte darin enthaltene Material mit dem in dem vom Festelektrolyten 3 umschlossenen Raum 5 und im Speicher 7 enthaltenen Material umgesetzt werden kann.

In einer bevorzugten Ausführungsform ist der vom Festelektrolyten 3 umschlossene Raum 5 ein Raum für Anodenmaterial und der den Festelektrolyten 3 umschließende Raum 11 ein Raum für Kathodenmaterial.

Um die Funktion der elektrochemischen Zelle 1 zu gewährleisten ist der Festelektrolyt 3 in der Ausführungsform, in der der Raum für Anodenmaterial der vom Festelektrolyten 3 umschlossene Raum ist, von einer porösen Elektrode 13 umschlossen. Die elektrochemische Zelle 1 dient insbesondere als Speicher für elektrische Energie. Um die elektrische Energie zu gewinnen, reagiert das Anodenmaterial mit dem Kathodenmaterial. Diese Reaktion erfolgt in der porösen Elektrode 13. Damit die Reaktion stattfinden kann ist es dabei notwendig, dass der Festelektrolyt für Ionen des Anodenmaterials, bevorzugt Alkalimetall-Ionen und insbesondere NatriumIonen durchlässig ist. Das als Anodenmaterial eingesetzte Alkalimetall reagiert mit dem vorzugsweise als Kathodenmaterial verwendeten Schwefel unter Bildung von Alkalimetall-Polysulfid.

Die elektrische Anbindung der elektrochemischen Zelle 1 erfolgt dabei wie dem Fachmann bekannt ist über hier nicht dargestellte Elektroden, wobei eine Elektrode üblicherweise mit der porösen Elektrode 13 verbunden ist und eine zweite Elektrode mit dem elektrisch leitenden Anodenmaterial.

Erfindungsgemäß ist in dem vom Festelektrolyten 3 umschlossenen Raum 5 ein Verdränger 15 aufgenommen. Durch den Verdränger 15 wird das Volumen des vom Festelektrolyten 3 umschlossenen Raumes 5 reduziert. Insbesondere dann, wenn der vom Festelektrolyten 3 umschlossene Raum 5 der Raum für das Anodenmaterial ist, hat dies eine Verbesserung der Betriebssicherheit der elektrochemischen Zelle 1 zur Folge, da der Anteil an Anodenmaterial, der im Falle eines Bruchs des Festelektrolyten unkontrolliert abreagieren kann stark reduziert ist.

In der hier dargestellten Ausführungsform ist im Verdränger 15 ein Hohlraum 17 ausgebildet. Um die Temperatur der elektrochemischen Zelle 1 zu regeln oder zu steuern wird der Hohlraum 17 von einem Temperiermedium durchströmt. Hierzu mündet ein Zulauf 19 in den Hohlraum 17. Über einen Ablauf 21 kann das Temperiermedium wieder aus dem Hohlraum 17 abfließen. In der hier dargestellten Ausführungsform ist der Zulauf 19 in Form eines Tauchrohres 23 in den Hohlraum 17 gestaltet.

Sowohl der Zulauf 19 als auch der Ablauf 21 sind mit einem Vorlagebehälter 25 für das Temperiermedium verbunden. Um die elektrochemische Zelle 1 zu temperieren fließt Temperiermedium aus dem Vorlagebehälter 25 durch den Zulauf 19 in den Hohlraum 17, durchströmt den Hohlraum 17 und fließt über den Ablauf 21 zurück in den Vorlagebehälter 25. Damit die Temperatur der elektrochemischen Zelle 1 gesteuert oder geregelt werden kann, ist zusätzlich ein hier nicht dargestelltes Temperieraggregat vorgesehen, beispielsweise Wärmeübertrager. Der Wärmeübertrager ist dabei vorzugsweise so gestaltet, dass sich mit diesem die Temperatur des Temperiermediums einstellen lässt. Hierzu ist es besonders bevorzugt, wenn als Wärmeübertrager ein elektrisches Heizelement eingesetzt wird. Sobald die Temperatur des Temperiermediums im Rücklauf zu niedrig ist oder die Temperatur innerhalb der elektrochemischen Zelle 1, wird die Temperatur des Temperiermediums erhöht. Wenn auch eine Kühlung der elektrochemischen Zelle 1 ermöglicht werden soll, ist es erforderlich, zusätzlich ein Temperieraggregat einzusetzen, das auch kühlen kann. Alternativ kann auch ein Temperieraggregat genutzt werden, mit dem sowohl eine Kühlung als auch eine Heizung möglich ist. Besonders bevorzugt wird das Temperieraggregat im Vorlagebehälter 25 angeordnet, so dass der Vorlagebehälter 25 als Thermostat für das Temperiermedium genutzt werden kann. Selbstverständlich ist es alternativ auch möglich, das Temperieraggregat als Durchlauferhitzer und/oder Durchlaufkühler im Zulauf 19 des Temperiermediums zu positionieren. Bevorzugt ist jedoch, wenn der Vorlagebehälter 25 gleichzeitig als Thermostat arbeitet.

Alternativ zu der hier dargestellten Ausführungsform mit dem Tauchrohr 23 als Zulauf 19 und dem am oberen Ende in den Hohlraum 17 mündenden Ablauf 21 ist es auch möglich, den Zulauf am oberen Ende in den Hohlraum 17 münden zu lassen und den Ablauf als Tauchrohr zu gestalten. In diesem Fall strömt das Temperiermedium genau in der entgegengesetzten Richtung. Weiterhin ist es auch möglich, anstelle eines Hohlraums 17 im Verdränger 15 Kanäle im Verdränger 15 auszubilden, die von dem Temperiermedium durchströmt werden oder den Verdränger 15 doppelwandig zu gestalten, wobei das Temperiermedium den von dem Doppelmantel gebildeten Spalt durchströmt.

Als Material für den Verdränger eignet sich jedes wärmeleitende Material, das gegenüber dem in dem vom Festelektrolyten 3 umschlossenen Raum 5 enthaltenen Material, bevorzugt dem Alkalimetall, inert ist. Geeignete Materialien für den Verdränger sind zum Beispiel Stahl, Edelstahl, Aluminium oder Aluminiumlegierungen.

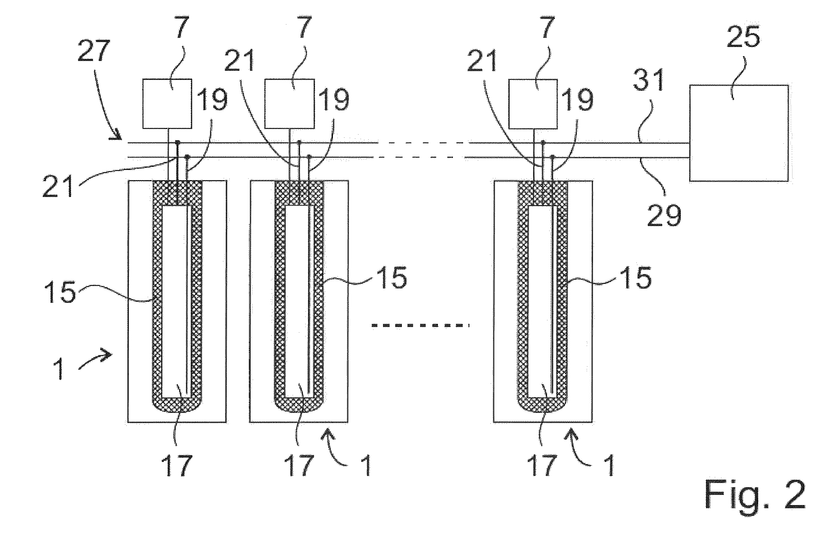

In Figur 2 ist eine Vorrichtung zur Speicherung elektrischer Energie mit mehreren elektrochemischen Zellen in einer ersten Ausführungsform dargestellt.

Eine Vorrichtung 27 zur Speicherung elektrischer Energie umfasst üblicherweise mehrere elektrochemische Zellen 1. Die elektrochemischen Zellen 1 sind dabei zum Beispiel wie in Figur 1 dargestellt aufgebaut. Die Anzahl der eingesetzten elektrochemischen Zellen 1 ist dabei abhängig von der geforderten elektrischen Leistung der Vorrichtung zur Speicherung elektrischer Energie. Die von einer Zelle abgegebene Leistung ist von den eingesetzten Stoffen, das heißt Kathodenmaterial und Anodenmaterial, sowie der Baugröße und Bauart abhängig. Ob die elektrochemischen Zellen elektrisch parallel oder in Reihe geschaltet werden, ist davon abhängig, welche Stromstärke oder welche Spannung gefordert sind. Durch eine elektrische Parallelschaltung der elektrochemischen Zellen wird die Stromstärke erhöht und durch eine elektrische Reihenschaltung die Spannung. Um die gewünschte Spannung und Stromstärke zu erhalten ist es dabei auch möglich, in einer Vorrichtung elektrochemische Zellen 1 elektrisch in Reihe zu schalten und mehrere jeweils in Reihe geschaltete elektrochemische Zellen 1 parallel zu schalten. Wie die einzelnen elektrochemischen Zellen 1 dabei zu verschalten sind, ist dem Fachmann bekannt.

Um die elektrochemischen Zellen 1 zu temperieren, werden diese, wie auch die in Figur 1 dargestellte elektrochemische Zelle 1 von einem Temperiermedium durchströmt. In der hier dargestellten Ausführungsform sind hierzu die elektrochemischen Zellen in Parallelschaltung mit einem Vorlagebehälter 25 für das Temperiermedium verbunden. Der Vorlagebehälter 25 ist dabei vorzugsweise, wie vorstehend bereits beschrieben, ein Thermostat, mit dem die Temperatur des Temperiermediums gesteuert oder geregelt werden kann.

Zur Realisierung der Verbindung der elektrochemischen Zellen 1 in Parallelschaltung mit dem Vorlagebehälter 25, münden in den Vorlagebehälter 25 ein Verteiler 29 und ein Sammler 31. Zur Temperierung der elektrochemischen Zellen strömt das Temperiermedium aus dem Vorlagebehälter 25 in den Verteiler 29, aus dem die Zuläufe 19 zu dem Hohlraum 17 in den Verdrängern 15 abzweigen. Das Temperiermedium wird aus dem Verteiler 29 in die Zuläufe 19 verteilt, so dass der Hohlraum 17 in den Verdrängern 15 jeder elektrochemischen Zelle 1 von dem Temperiermedium durchströmt wird. Vorteil dieser Verschaltung ist, dass das in den Hohlraum 15 des Verdrängers 17 jeder elektrochemischen Zelle 1 einströmende Temperiermedium die gleiche Temperatur hat. Um auch die Durchflussmenge für alle Zellen im Wesentlichen gleich groß zu halten, werden geeignete Leitungsquerschnitte und Rohrlängen gewählt. Die genaue Vorgehensweise ist dem Fachmann bekannt. Um eine im Wesentlichen gleich große Durchflussmenge zu erhalten ist es insbesondere erforderlich, dass der Strömungswiderstand an jedem Verdränger 15 gleich groß ist.

Nach dem Durchströmen der Verdränger 17 fließt das Temperiermediums jeweils in die Abläufe 21 aus den einzelnen elektrochemischen Zellen 1. Die Abläufe 21 sind jeweils mit dem Sammler 31 verbunden, so dass das Temperiermedium aus den Abläufen 21 in den Sammler 31 und von dort zurück in den Vorlagebehälter 25 strömt.

In der hier dargestellten Ausführungsform ist jede elektrochemische Zelle 1 mit einem Speicher 7 für Anodenmaterial beziehungsweise Kathodenmaterial verbunden. Hier ist es alternativ auch möglich, jeweils einen Speicher 7 für mehrere elektrochemische Zellen 1 vorzusehen, wobei die elektrochemischen Zellen dann vorzugsweise in Parallelschaltung mit dem Speicher 7 für Anodenmaterial beziehungsweise Kathodenmaterial verbunden sind. Wenn ein Speicher 7 für mehrere elektrochemische Zellen 1 vorgesehen ist, so weist dieser vorzugsweise ein Volumen auf, das der Summe der Volumina entspricht, die die einzelnen Speicher aufweisen, wenn jede elektrochemische Zelle 1 mit einem Speicher 7 verbunden ist. Hierdurch wird ausreichend viel Anodenmaterial beziehungsweise Kathodenmaterial bereitgestellt, um eine ausreichend hohe Laufzeit der Vorrichtung zur Speicherung elektrischer Energie zu erhalten.

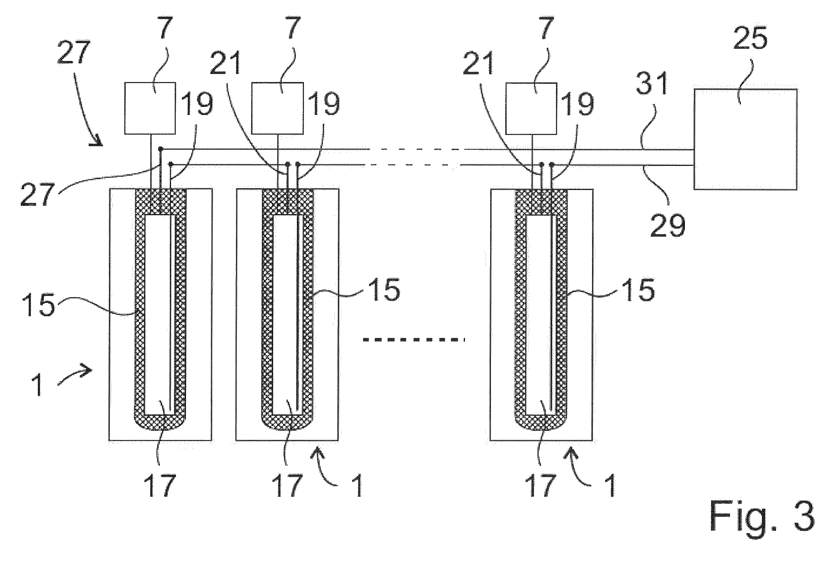

In Figur 3 ist eine Vorrichtung zur Speicherung elektrischer Energie mit mehreren elektrochemischen Zellen in einer zweiten Ausführungsform dargestellt.

Im Unterschied zu der in Figur 2 dargestellten Ausführungsform sind bei der in Figur 3 dargestellten Ausführungsform die elektrochemischen Zellen 1 in Reihenschaltung mit einem Vorlagebehälter 25 für das Temperiermedium verbunden.

Für die Reihenschaltung ist der Zulauf 19 einer ersten elektrochemischen Zelle 1 mit dem Vorlagebehälter 25 verbunden. Der Ablauf 21 der ersten elektrochemischen Zelle 1 bildet den Zulauf 19 zu einer zweiten elektrochemischen Zelle 1. Im weiteren Verlauf ist dann immer der Ablauf 21 einer elektrochemischen Zelle 1 der Zulauf 19 zu einer nachfolgenden elektrochemischen Zelle 1. Der Ablauf 21 der letzten elektrochemischen Zelle 1 mündet dann wieder in den Vorlagebehälter 25.

Durch die Reihenschaltung durchströmt das Temperiermedium nacheinander alle in Reihe geschalteten elektrochemischen Zellen 1. Dies hat den Vorteil, dass der Volumenstrom an Temperiermedium durch alle elektrochemischen Zellen 1 gleich groß ist. Um zu gewährleisten, dass die vom Temperiermedium abgegebene oder aufgenommene Wärmemenge ebenfalls für alle elektrochemischen Zellen 1 im Wesentlichen gleich groß ist, ist der Volumenstrom des Temperiermediums ausreichend groß zu wählen, so dass sich die Temperatur des Temperiermediums beim Durchströmen aller in einer Reihe angeordneten Zellen nur geringfügig, bevorzugt um weniger als 30 K ändert.

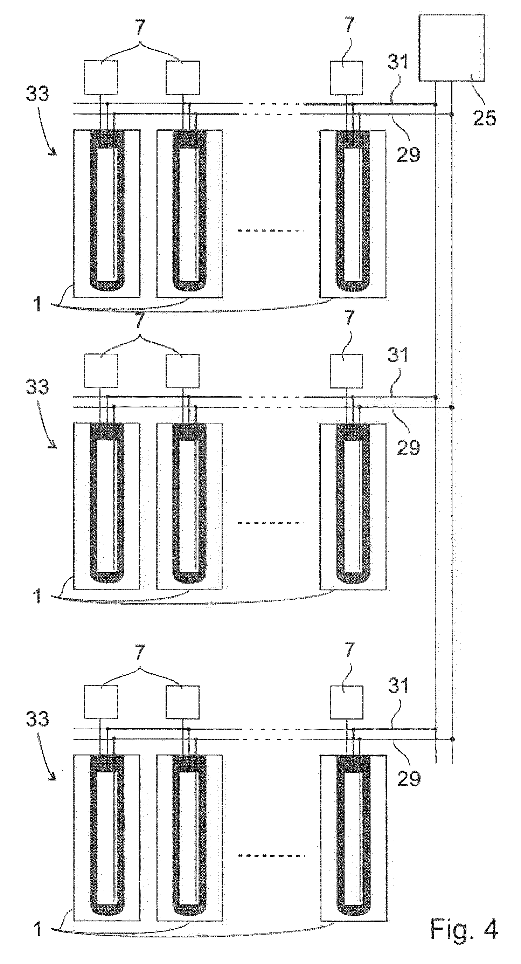

In Figur 4 ist eine Vorrichtung zur Speicherung elektrischer Energie mit mehreren elektrochemischen Zellen in einer dritten Ausführungsform dargestellt.

Bei der in Figur 4 dargestellten Ausführungsform werden jeweils mehrere elektrochemische Zellen 1 zu einem Zellverband 33 miteinander verbunden. In jedem Zellverband 33 sind jeweils die Zuläufe 19 aller elektrochemischen Zellen 1 des Zellverbandes 33 mit einem Verteiler 29 verbunden und die Abläufe 21 aller elektrochemischen Zellen 1 des Zellverbandes 33 mit einem Sammler 31.

Die Verteiler 29 der Zellverbände 33 sind jeweils mit einem Hauptverteiler 35 verbunden, wobei der Hauptverteiler 35 an den Vorlagebehälter 25 angeschlossen ist. Entsprechend sind auch die Sammler 31 der Zellverbände 33 mit einem mit dem Vorlagebehälter 25 verbundenen Hauptsammler 37 verbunden. Hierbei erfolgt die Anbindung der Verteiler 29 an den Hauptverteiler 35 und die Anbindung der Sammler 31 an den Hauptsammler 37 ebenfalls in Form einer Parallelschaltung.

Alternativ zu der in Figur 4 dargestellten Ausführungsform ist es auch möglich, die elektrochemischen Zellen 1 der Zellverbände 33 jeweils wie in Figur 3 gezeigt in Reihe miteinander zu verbinden und jeden in Reihe geschalteten Zellverband 33 mit dem Hauptverteiler 35 und dem Hauptsammler 37 zu verbinden. Auch ist es möglich, die jeweiligen Zellverbände 33 in Reihe zu schalten, wobei die elektrochemischen Zellen 1 der Zellverbände 33 hierzu parallel miteinander verbunden sind. Hierzu ist der Verteiler 29 des ersten Zellverbandes 33 mit dem Vorlagebehälter 25 verbunden und der Sammler 31 des Zellverbandes 33 wird zum Verteiler 29 des nachfolgenden Zellverbandes 33. Entsprechend ist dann nachfolgend jeweils der Sammler 31 eines Zellverbandes 33 der Verteiler 29 des nachfolgenden Zellverbandes 33 und der Sammler 31 des letzten Zellverbandes 33 wird zurück in den Vorlagebehälter 25 geführt.

Die elektrische Verschaltung der elektrochemischen Zellen 1 und die Verbindung mit dem Speicher 7 für Kathodenmaterial beziehungsweise Anodenmaterial kann für die in den Figuren 3 und 4 dargestellten Ausführungsformen dabei jeweils wie vorstehend zu der in Figur 2 dargestellten Ausführungsform erfolgen.

### Bezugszeichenliste

- 1: elektrochemische Zelle
- 3: Festelektrolyt
- 5: vom Festelektrolyten 3 umschlossener Raum
- 7: Speicher
- 9: Gehäuse
- 11: den Festelektrolyten 3 umschließender Raum
- 13: poröse Elektrode
- 15: Verdränger
- 17: Hohlraum
- 19: Zulauf
- 21: Ablauf
- 23: Tauchrohr
- 25: Vorlagebehälter
- 27: Vorrichtung zur Speicherung elektrischer Energie
- 29: Verteiler
- 31: Sammler
- 33: Zellverband
- 35: Hauptverteiler
- 37: Hauptsammler

## Patentansprüche

1. Elektrochemische Zelle, umfassend einen Raum für Anodenmaterial und einen Raum für Kathodenmaterial, die durch einen Festelektrolyten (3) voneinander getrennt sind, wobei der Festelektrolyt (3) mit einer porösen Elektrode (13) verbunden ist und einen Raum (5) umschließt, in dem ein Verdrängerkörper (15) aufgenommen ist, wobei der vom Festelektrolyten (3) umschlossene Raum (5) der Raum für Anodenmaterial oder der Raum für Kathodenmaterial ist, **dadurch gekennzeichnet, dass** der Verdrängerkörper (15) von einem Temperiermedium durchströmbar ist.

2. Elektrochemische Zelle gemäß Anspruch 1, **dadurch gekennzeichnet, dass** der Verdrängerkörper (15) als Hohlkörper ausgebildet ist, wobei das Temperiermedium durch den Hohlkörper strömt.

3. Elektrochemische Zelle gemäß Anspruch 1, **dadurch gekennzeichnet, dass** im Verdrängerkörper (15) Kanäle ausgebildet sind, die vom Temperiermedium durchströmt werden.

4. Elektrochemische Zelle gemäß einem der Ansprüche 1 bis 3, **dadurch gekennzeichnet, dass** der vom Festelektrolyten (3) umschlossene Raum (5) der Raum für Anodenmaterial ist und mit einem Speicher (7) für Anodenmaterial verbunden ist.

5. Elektrochemische Zelle gemäß einem der Ansprüche 1 bis 3, **dadurch gekennzeichnet, dass** der vom Festelektrolyten (3) umschlossene Raum (5) der Raum für Kathodenmaterial ist und mit einem Speicher (7) für Kathodenmaterial verbunden ist.

6. Elektrochemische Zelle gemäß einem der Ansprüche 1 bis 5, **dadurch gekennzeichnet, dass** das Anodenmaterial ein Alkalimetall und das Kathodenmaterial Schwefel oder ein Alkalimetallpolysulfid ist.

7. Elektrochemische Zelle gemäß Anspruch 6, **dadurch gekennzeichnet, dass** das Alkalimetall Natrium ist.

8. Vorrichtung zur Speicherung elektrischer Energie, umfassend mindestens zwei elektrochemische Zellen (1) gemäß einem der Ansprüche 1 bis 7.

9. Vorrichtung gemäß Anspruch 8, **dadurch gekennzeichnet, dass** mindestens zwei elektrochemische Zellen (1) mit einem Vorlagebehälter (25) für das Temperiermedium verbunden sind, wobei jeder Verdränger (15) einen Zulauf (19) für Temperiermedium und einen Ablauf (21) für Temperiermedium aufweist und die Zuläufe (19) und die Abläufe (21) zu den Verdrängern (15) in Reihenschaltung oder in Parallelschaltung miteinander verbunden sind.

10. Vorrichtung gemäß Anspruch 8 oder 9, **dadurch gekennzeichnet, dass** mehrere elektrochemische Zellen (1) zu einem Zellverband (33) verbunden sind, wobei die Zuläufe (19) der elektrochemischen Zellen (1) des Zellverbandes (33) jeweils mit einem Verteiler (29) verbunden sind und die Abläufe (21) der elektrochemischen Zellen (1) mit einem Sammler (31) verbunden sind und wobei die Verteiler (29) der Zellverbände mit einem Hauptverteiler (35) verbunden sind und die Sammler (31) mit einem Hauptsammler (37).

11. Vorrichtung gemäß Anspruch 8 oder 9, **dadurch gekennzeichnet, dass** mindestens zwei Zellverbände (33) mit in Reihenschaltung verbundenen Zuläufen (19) und Abläufen (21) parallel mit einem Hauptverteiler (35) und einem Hauptsammler (37) verbunden sind.

12. Vorrichtung Gemäß einem der Ansprüche 8 bis 11, **dadurch gekennzeichnet, dass** die vom Festelektrolyten (3) umschlossenen Räume (5) mehrerer elektrochemischer Zellen (1) jeweils Anodenräume sind und alle Anodenräume mit einem gemeinsamen Speicher für Anodenmaterial verbunden sind.

13. Vorrichtung gemäß einem der Ansprüche 8 bis 11, **dadurch gekennzeichnet, dass** die vom Festelektrolyten (3) umschlossenen Räume (5) mehrerer elektrochemischer Zellen (1) jeweils Kathodenräume sind und alle Kathodenräume mit einem gemeinsamen Speicher für Kathodenmaterial verbunden sind.
